# EUROPEAN PATENT SPECIFICATION

(11) **EP 4 328 478 B1**
(45) Date of publication and mention of the grant of the patent: **03.06.2026**
(21) Application number: 22192166.1
(22) Date of filing: 25.08.2022
(51) Int. Cl.: F16M 11/04, F16M 13/02, H04R 1/02, H04N 5/64

(54) **BRACKET ARRANGEMENT FOR SOUNDBAR-TV COMBINATION**
BÜGELANORDNUNG FÜR SOUNDBAR-TV-KOMBINATION
AGENCEMENT DE SUPPORT POUR BARRE DE SON-TV COMBINÉS

(43) Date of publication of application: 28.02.2024
(73) Proprietor: BANG & OLUFSEN A/S, 7600 Struer (DK)
(72) Inventor: BERGSTRØM GRAABÆK, Jakob, 7500 Holstebro (DK)
(74) Representative: Patrade A/S

(56) References cited:
- WO-A1-2015/035596
- CN-A- 109 327 747
- US-A1- 2021 317 945
- US-B2- 11 365 780

## Description

### Field of the Invention

The present invention is directed to a bracket for mounting and arranging a soundbar and/or a TV/video screen installation, and a method of assembling a soundbar and a TV/video screen using such a bracket. The bracket may be extended by further parts such that a stable and adjustable construction is provided whereby it is possible to assemble various audio and video components such that they are presented as a single integral unit with an overall coherent design.

### Background of the Invention

In the art it is known to be able to assemble various audio and video components into an assembly which presents itself as one integral unit. An example of such an assembly is known under the tradename "Beovision Eclipse" from Bang & Olufsen. In this assembly the soundbar is attached to a stand and an interface for a TV/video screen is provided such that various screen sizes having certain characteristics may be attached to the soundbar. With this construction there is a connection between for example a floor or wall stand and the soundbar and a further connection between the soundbar and a screen. This construction necessitates that the loudspeaker units arranged in the soundbar must be decoupled from the housing of the soundbar in order for vibrations not to travel to the screen and/or the floor stand whereby distortions in the overall presentation of any video and audio experience may occur. The decoupling of the loudspeaker units from the housing of the soundbar requires that a certain percentage of the soundbar's volume is occupied by the means for acoustical de-coupling of the loudspeaker units from the housing as well as the necessity to have walls for both the internal speaker cabinet as well as the housing. This naturally deducts from the available volume of the soundbar housing which normally will be used in order to be able to present a relatively high sound pressure and thereby utilize the overall volume of the soundbar as much as possible for the production of sound. In other words, the decoupling of the loudspeaker cabinets inside the soundbar housing. The requiring space inside the volume of the soundbar housing detracts from the ability of using the soundbar's volume to produce sound.

Other examples in the prior art disclose systems assembled into special racks where each audio and/or video component has its own particular fastening means in the racks such that they may be held together as a single unit. This however does not constitute an integral design which presents an overall audio video installation as a single integral unit. Furthermore, even in instances where only a soundbar is arranged, the attachment means for attaching the soundbar to a stand whether it being a wall, floor or table stand, the fastening deducts from the overall volume of the soundbar and/or is clearly visible as an attachment unit thereby not presenting an integral design of the overall soundbar. US 2021/317945 A1 discloses an example of a bracket of the prior art.

### Object of the Invention

Consequently, there is a need for a bracket which is able to assemble various audio and video components such that when assembled as a unit comprising a soundbar, a TV/video screen and a stand, the assembled product must have a visually integrated appearance with aesthetically aligned product surfaces. At the same time a product configuration consisting of only a soundbar and a stand i.e. without a TV/video screen must also be feasible and still fulfilling the same requirement.

### Description of the Invention

At least within this description and claims the terms audio installation and soundbar will be used to describe an electronic component comprising loudspeaker units, where the audio installation and soundbar are designed to emit sound. For the purpose of the present invention there is no distinction between the terms soundbar and audio installation. The bracket must have versatility such that different versions and sizes of the TV/video screen and different types of stands such as floor stand, table stand, or wall stand can be combined with the same soundbar. Also, the bracket must enable maximum use of the soundbar's internal cabinet volume as acoustical volume in order to be as effective as possible in order to be able to provide the loudest sound pressure without an extraordinary large volume. The speaker drivers of the soundbar must be decoupled from the TV/video screen and the stand to prevent vibrations from propagating into the surroundings. Also, it must be possible to connect a wide range of TV/video screen models and sizes to the bracket without the need to exchange any part of the bracket.

The present invention addresses the above mentioned requirements by providing a bracket suitable to be connected to an audio or an audio and video installation, where said bracket comprises a main load carrying profile, said profile having a first longitudinal extent, from which main load carrying profile one or more mounting studs extend, where said mounting studs are fastened to the main load carrying profile and suitable to engage and carry an audio installation, and further are provided with resilient sleeves, where the one or more mounting studs are arranged perpendicular to, and extending away from the first longitudinal extent of the main load carrying profile, and further where the main load carrying profile in a distal end is provided with an engagement member fastened to the main load carrying profile, and where said engagement member has coupling means suitable to engage and fix the bracket to a floor, wall or table stand. One of the important aspects with the present invention is the acoustical decoupling between the loudspeaker units, the TV/video screen and floor, wall or table stand. By covering the mounting studs extending from the main load carrying profile with resilient sleeves, it is assured that the interconnection between the audio installation, such as for example a soundbar, and the bracket is acoustically decoupled. In this connection "acoustically decoupled" shall be understood such that vibrations arising when the loudspeaker units are activated (emitting sound) are dampened and substantially prevented from propagating to the bracket as such, by means of the resilient sleeves. The dampening or isolation shall be so effective that no detrimental vibrations are transmitted from the soundbar to the rest of the installation or the environment. Typically, the mounting studs are welded, press-forged or bolted onto the main load carrying profile, such that a strong mechanical connection is provided. This connection shall be suitable to support the load of even a large soundbar and transfer the load to a stand. The resilient sleeves have a thickness, in the range of between 1 and 6 mm, between the mounting stud and the sleeve's surface. Typically, the resilient material will be selected such that the Shore A hardness is in the range between 45 and 75 to achieve the desired spring force.

With this design is achieved that the soundbar may emit even very loud sound without influencing the rest of the construction. This is particularly important in further embodiments where a screen is included in the assembly. However also with respect to the stand and the surface the stand is arranged on or at, the minimizing of the transmission of vibrations is also important. For example, if a table stand is used, unnecessary vibrations may cause the table, bookshelf or the like to rattle, causing unwanted noise.

**In** some embodiments it may be advantageous to provide three mounting studs on the load carrying profile. By providing three mounting studs, the engagement with the soundbar/audio installation is very "rigid" and firm. The third mounting stud effectively hinders rotation of the audio installation relative to the bracket, such that a very firm engagement is achieved between the bracket and the audio installation.

**In** a further advantageous embodiment two or more mounting rods suitable to carry a screen are provided on the main load carrying profile, said mounting rods extend from the main load carrying profile in a direction opposite to the mounting studs.

In this manner the main load carrying profile is able to carry and support both the audio installation and a TV/video screen. Furthermore, in order to arrange the audio/video installation on a stand the engagement member is common for both the audio and the video installations and need not be designed for one or the other. Also, the same coupling means between the engagement member and the stands are used and as such no special provisions are necessary when designing the manner in which the stand is connected to the audio or audio and video installation.

In a still further embodiment of the invention, each mounting rod has a second longitudinal extent substantially perpendicular to the first longitudinal extent of the main load carrying profile, and where two or more grooves are provided in each mounting rod perpendicular to the second longitudinal extent of said mounting rods. By extending the mounting rods opposite to the mounting studs, the bracket may be loaded evenly as the mounting rods are designed to carry the load from a screen. Furthermore, when a soundbar is installed on the mounting studs the mounting rods, if they were extending in the same direction as the mounting studs, would be inaccessible and therefore, by arranging the mounting rods extending away from the mounting studs, it is assured that a screen may be mounted, and also that an adjustable mounting, for example in a selected groove of the mounting rods may be accomplished.

The grooves provide a mechanical means for engaging a screen structure, and by having multiple grooves it is straightforward to mount any screen using a suitable groove such that the screen's front may be at the desired position relative to the audio installation. This is facilitated by arranging the grooves with a mutual distance between adjacent grooves in the second longitudinal extent with a fixed distance (a) where said distance is selected between 5 mm and 20 mm.

In a still further embodiment of the invention, a video screen mounting system is provided, said video screen mounting system comprises two parts: a structural bracket and a screen bracket; where said structural bracket has two or more parallel legs extending from a main plate section, where at least two apertures are provided in each leg, such that each leg may be connected to a bracket, such that the mounting rods extend through the apertures in the legs, and where the thickness of the material of the legs may be accommodated in one of the grooves provided in the mounting rods, and where the screen bracket is adjustably connected by means of adjustment means to the structural bracket.

Although it may, with some screens, be possible to mount the screens directly onto the mounting rods, the provision of a video screen mounting system provides additional advantages and adjustment possibilities. As the video screen mounting system comprises two parts: a structural bracket and a screen bracket, and means for adjusting the two relative to each other, even finer and better adjustment possibilities are provided. With the provision of the video screen mounting system, it is foreseen that two brackets are installed in the rear of the audio installation and that the brackets are arranged at a predetermined distance corresponding to the distance between the legs of the structural bracket. Thereby each leg may be mounted on a separate bracket.

As the audio installation already is decoupled from the bracket and thereby from the screen (video installation), a strong mechanical connection may be used when assembling the other components of the audio/video arrangement. This is an advantage in that the overall system (audio and video) thereby becomes very rigid and stable.

The provision of adjustment means between the structural bracket and the screen bracket, as proposed in a further advantageous embodiment comprises two or more adjustment studs projecting from either the structural bracket or the screen bracket, where an aperture is superposed the adjustment stud on the other bracket, and where orthogonal threaded holes are provided in the adjustment studs, which holes, in use are arranged one vertically and the other horizontally, where the structural bracket or the screen bracket has flanges accommodating threaded bolts, which bolts are threaded through the holes in the adjustment studs, such that by manipulating the bolts, the adjustment studs, and thereby the structural bracket or the screen bracket is moved relative to the other bracket.

With this arrangement it becomes possible to fine-tune the initial mounting of the screen in the grooves in the mounting studs. As the grooves are arranged at a certain distance, the adjustment means provide a true stepless adjustment possibility where the screen may be adjusted to any desired position relative to the bracket and the audio installation. Naturally the length/extent of the mounting studs and the grooves limit the total adjustment distance, but within these limitations the screen may be placed in any desired position.

In order to mount the screen to the screen bracket, the screen bracket is provided with rows of holes, where the rows of holes are arranged according to a VESA standard, whereby a screen may be fastened to the screen bracket by superposing a number of the holes arranged according to said VESA standard in the screen bracket over corresponding holes provided in the screen, and threading a bolt or screw through at least some or all of the overlapping holes.

As a large plurality of holes are provided in a recognized (VESA) pattern on the screen bracket, any screen with a mounting possibility fulfilling the VESA standard will be able to be mounted to the screen bracket. This feature together with the adjustment means described above including the mounting studs with grooves and the stepless adjustment means, provides the possibility to mount and adjust more or less any flat screen onto the bracket, and thereby creating an integrated visible appearance.

The VESA standard is a standard for attaching flat screens / monitors / televisions to monitor mounts or TV mounts. It defines possible locations of mounting holes on the back of screens and screen mounts. Depending on the size and weight of the screen, at least four threaded holes are defined. With the VESA standard you can attach your TV to a monitor mount for the wall, the table, the floor or the ceiling. Prerequisite is that both the monitor / TV and the monitor mount cover the same VESA standard.

The adjustment of the screen is further developed in a further embodiment where the vertically arranged bolt may displace the screen bracket vertically relative to the structural bracket, a distance equal to or larger than the distance between two vertically adjacent holes in the screen bracket.

In this manner also differences in the placement of the VESA holes in the back of a screen may be adjusted to provide an overall integrated impression of the assembled system (audio and video), as the vertical displacement is able to displace the screen (with the screen bracket) a distance which is longer than the distance between the VESA apertures.

The same is true for a further embodiment where the horizontally arranged bolt may displace the screen bracket horizontally relative to the structural bracket a distance equal to or larger than the distance (a).

As the displacements discussed above may slightly tilt the screen's front surface out of perfect vertical, one or more further bolt(s) is/are provided either adjacent an upper part or a lower part of the video screen mounting system, where said bolt(s) by rotation urges either the structural bracket or the screen bracket away from or towards the other bracket. Hereby is facilitated that the slight "out of vertical" may be compensated.

As mentioned in the introduction the present invention is also directed to a method of using a bracket as discussed above, in the arrangement of an audio or audio and video installation, where a floor, wall or table stand is fastened to the bracket by connecting the coupling means provided in the engagement member of the bracket with corresponding coupling means provided in the floor, wall or table stand adapted for engagement with the coupling means in the engagement member, and inserting the mounting studs, with the resilient sleeves into apertures provided in a rear side of the audio installation, such that the weight of the audio installation is transferred to the mounting studs through the resilient sleeves which will effectively dampen vibrations thereby acoustically decoupling the audio installation from the bracket, and via the main load carrying profile and the engagement member transfer the load of the audio and, if provided, the video installation to the floor, wall or table stand.

When the audio installation is expanded by also providing a video installation the method foresees that said video screen is attached to the screen bracket and where the screen bracket is provided with rows of holes, where the rows of holes are arranged according to a VESA standard, whereby the TV/video screen may be fastened to the screen bracket by superposing a number of the holes arranged according to said VESA standard in the screen bracket over corresponding holes provided in a rear surface of the TV/video screen, and threading a bolt or screw through at least some or all of the overlapping holes, thereby fastening the video screen to the screen bracket.

In an advantageous embodiment the audio installation is a soundbar, said soundbar having a longitudinal extent, a depth and height, where at least one linear guide is provided, said linear guide at least being present adjacent either end of the soundbars' longitudinal extent, and where said video screen has a lower edge extending in the width direction of the video screen, and where after having attached the video screen to the video screen mounting system, the apertures in the legs are inserted over the mounting rods and accommodated in the grooves, such that the upper rim of each aperture is inserted in a groove, where the groove is selected such that the linear guide is parallel with the lower edge of the video screen, whereafter the adjustment means between the structural bracket and the screen bracket, comprising two or more adjustment studs projecting from either the structural bracket or the screen bracket are manipulated such that by rotating the threaded bolts threaded in the horizontal and vertical holes of the adjustment studs, the structural bracket or the screen bracket is moved relative to the other bracket, such that the lower edge of the video screen may be adjusted to be precisely aligned or just parallel with the linear guide , and that a desired distance is provided between said lower edge of the video screen and the linear guide.

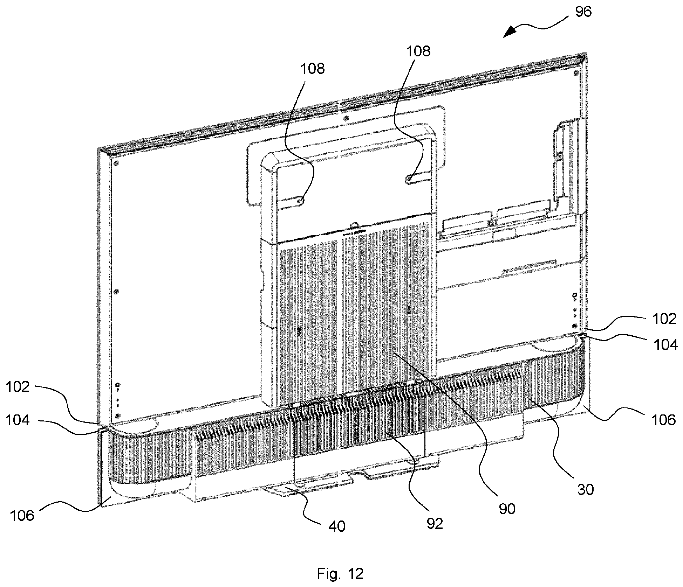

At least within the present invention the linear guide shall be understood as a physical presence on the soundbar which will aid in positioning the video screen in a parallel relationship with the soundbar. The linear guide will be arranged parallel to the soundbar's longitudinal extend. It is not necessary that the linear guide is unbroken in its course. For example, in the example described with reference to fig. 12 (below) the linear guide takes the shape of wings extending in the longitudinal direction in either end of the soundbar. The linear guide may also be a distinct line on an upper surface, or a cam also on an upper surface. Any means provided on the upper surface of the soundbar suitable for guiding the video screen during adjustment into a position where a linear feature of the screen - typically a lower edge is parallel with the longitudinal extent of the soundbar, may constitute the linear guide.

In the appended figures a particular embodiment of the invention is described. It is however clear that the physical embodiments of the invention may vary considerably, as long as the inventive principles of the claims are fulfilled. Hence the examples shall only be understood as illustrative for the concept.

### Description of the Drawing

- Fig. 1a and 1b: illustrate a bracket 10 according to a possible embodiment;
- Fig. 2 and 3: illustrate a rear side of a soundbar with brackets 10 installed and with a cover 92 hiding the brackets 10 from view.
- Fig. 4: illustrates a video screen mounting system 60;
- Fig. 5: illustrates a table stand 40 onto which two brackets 10 are mounted;
- Fig. 6: illustrates a floor stand 42;
- Fig. 7: illustrates a motorized wall stand 44;
- Fig. 8 and 9: Iillustrate cross sections through a bracket 10;
- Fig. 10 and 11: illustrate adjustment means 100;
- Fig. 12: illustrates the rear side of an audio/video installation.

### Detailed Description of the Invention

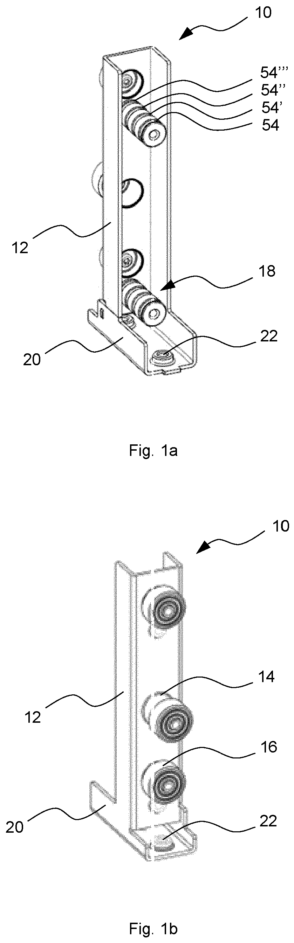

In fig. 1a and fig. 1b is illustrated a bracket 10 according to a possible embodiment. The construction of the bracket 10 is the core of the present invention, due to the advantages it provides as will become evident from the description below.

The bracket 10 has a main load carrying profile 12. The cross-section of the load carrying profile 12 may be U-shaped or other suitable cross-section that will provide stiffness to the bracket 10.

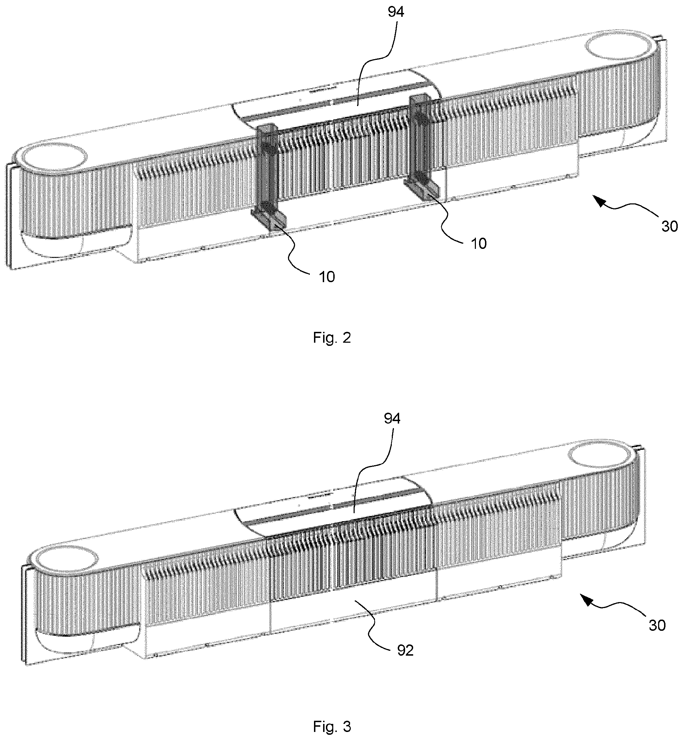

Extending from the load carrying profile 12 is a number of mounting studs 14, see fig. 1b, in this example three mounting studs 14. On each mounting stud 14 is provided a resilient sleeve 16. In the rear side of an audio installation 30 as illustrated in fig. 2 is provided (not illustrated) suitable apertures for inserting the mounting studs 14 with resilient sleeves 16 into a carrying structure in the audio installation 30, such that the mounting studs 14 will be carrying the entire load from the audio installation 30. For stability reasons two brackets 10 are fastened to the rear side of the audio installation 30. The resilient sleeves 16 are interposed between the mounting studs 14 and the audio installation 30. A vibration dampener is thereby provided such that the bracket 10 is acoustically decoupled from the audio installation 30. At the same time, only a very limited volume of the audio installation/soundbar 30 is sacrificed in order to accommodate the brackets 10. This is an important aspect, as it is desirable to maintain a large acoustical volume in order to be able to generate enough sound, while at the same time not having to "over-size" the audio installation 30. Furthermore, the resilient sleeve's 16 dampening effect acoustically decoupling the loudspeaker units in the soundbar from the bracket (and thereby any stand used for positioning the soundbar) prevents vibrations from the loudspeaker units to propagate into the surroundings via the bracket 10. The bracket 10, see fig. 1a, is also provided with mounting rods 18 extending from the main load carrying profile 12 in a direction opposite to the mounting studs 14. These mounting rods 18 are used when a video installation is to be arranged in the system. This will be explained in detail below.

In one end - in use the lower end - of the bracket 10 an engagement member 20 is provided. This engagement member 20 may be integral with the load carrying profile 12, i.e. made as one single piece, or may be rigidly assembled with the load carrying profile 12. Under any circumstance the engagement member 20 shall be able to transfer the load exerted on the bracket 10, typically stemming from a video screen 96 and an audio installation 30. The engagement member 20 is foreseen with coupling means 22. These coupling means 22 are adapted to fixedly engage a stand, such as a floor, table or wall stand.

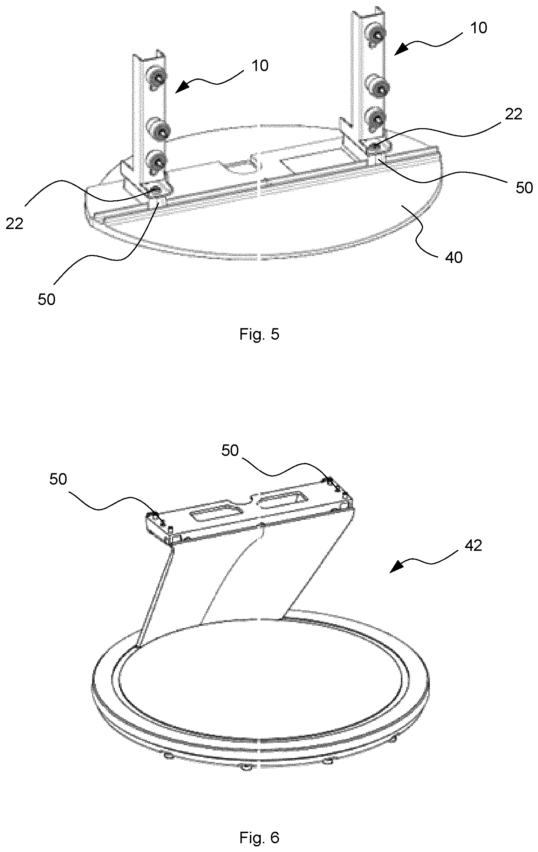

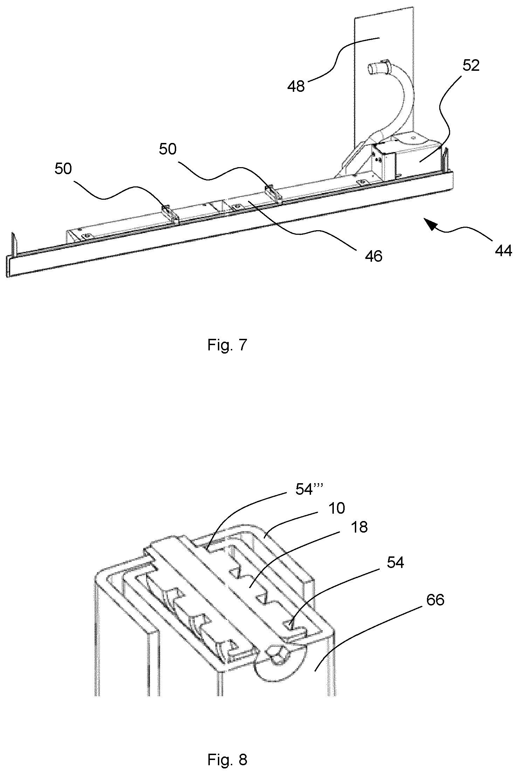

For example, in fig. 5 is illustrated a table stand 40 onto which two brackets 10 are mounted on coupling means 50 provided on the stand 40. In fig. 6 is illustrated a floor stand 42, where upon on an upper part is also provided coupling means 50, suitable to attach the brackets 10 to. **In** some versions of this stand, it is motorized such that it may rotate, thereby pointing the screen 96 and soundbar 30 (not illustrated) in a desired direction. In fig. 7 is illustrated a motorized wall stand 44. Coupling means 50 are provided on an arm 46 of the motorized wall stand 44. The arm 46 is hingedly connected to a mounting plate 48, which may be mounted to a wall (not illustrated). A motor 52 can be activated to pivot the arm 46 away from or towards the wall. As the bracket 10 (not illustrated) is mounted on the coupling means 50, the entire audio and video installation is also pivoted.

Turning back to fig. 1a the mounting rods 18 are used when a video screen is to be part of the installation. The mounting rods 18 are provided with grooves 54-54‴ (in this example four grooves). Obviously, any desired number of grooves may be provided. The grooves 54-54‴ are mutually spaced a distance "a".

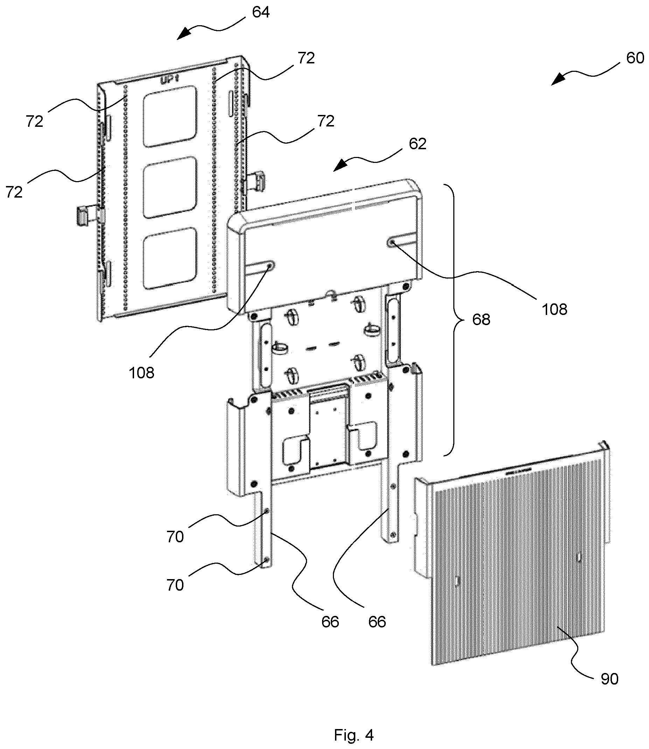

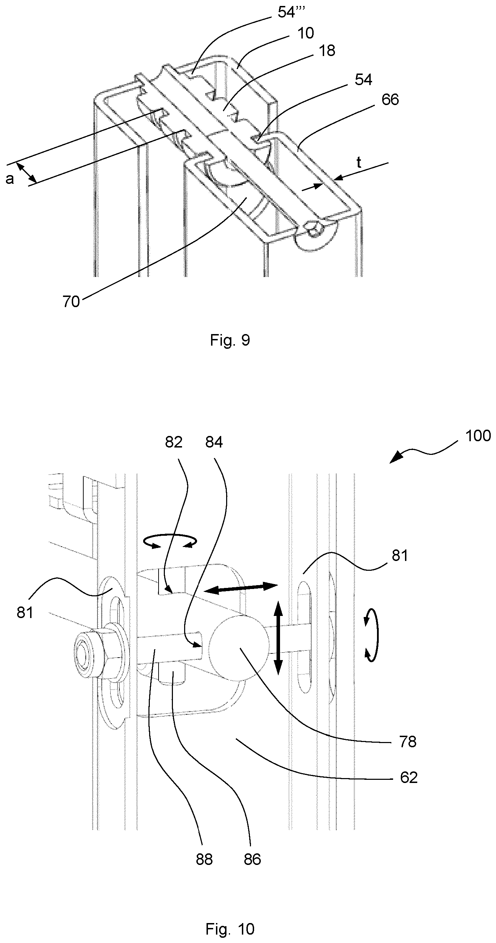

In order to mount a video screen 96 as illustrated in fig. 12, a video screen mounting system 60 may be used, as illustrated in fig. 4. The video screen mounting system 60 comprises a structural bracket 62 and a screen bracket 64. The structural bracket 62 has two parallel legs 66 extending from a main plate section 68. Two apertures 70 are provided in each leg 66, such that each leg 66 may be connected to a bracket 10. This is done by placing the legs 66 such that the mounting rods 18 extend through the apertures 70 in the legs 66. By selecting the thickness "t" (see fig. 9) of the material of the legs 66 or dimensioning the width of the grooves 54-54‴, the legs 66 may be accommodated in one of the grooves 54-54‴.

In fig. 8 and fig. 9 are illustrated a cross section through a bracket 10 where a leg 66 of the structural bracket 62 is mounted. In fig. 8 the leg 66 is mounted in the innermost groove 54‴, whereas in fig. 9 the leg 66 is mounted in the outermost groove 54. As may be seen in fig. 9, the aperture 70 in the leg 66 is in the shape of a keyhole, such that the leg 66 may be placed over the mounting rod 18 and slide downwards into a groove 54-54‴.

The screen bracket 64 is provided with rows/arrays of holes 72. These holes 72 are arranged according to VESA standards, such that any screen 96 which is provided with mounting holes according to the VESA standard may be attached to the screen bracket 64. A screen 96 may be fastened to the screen bracket 64 by superposing a number of the holes 72 arranged according to said VESA standard in the screen bracket 64 over corresponding holes provided in the screen 96, and threading and fastening a bolt or screw through at least some or all of the overlapping holes.

As an important object of the present invention is to provide very precise adjustment possibilities in addition to the acoustic decoupling, the screen bracket 64 is adjustably connected by means of adjustment means 100 to the structural bracket 62.

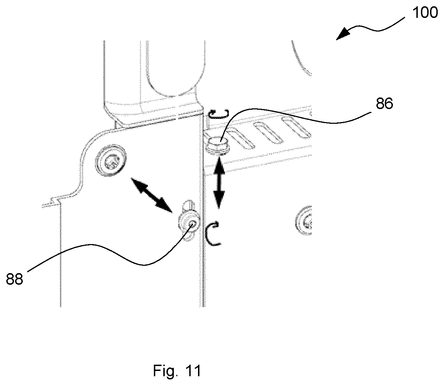

The adjustment means 100 are illustrated in fig. 10 and 11. Between the structural bracket 62 and the screen bracket 64 are arranged two or more adjustment studs 78 projecting from either the structural bracket 62 or the screen bracket 64, where an aperture 80 on the other bracket is superposed the adjustment stud 78, and where orthogonal threaded holes 82,84 are provided in the adjustment studs 78. The holes 82,84 will in use be arranged one vertically and the other horizontally. The structural bracket 62 or the screen bracket 64 has flanges 81 accommodating threaded bolts 86,88, which bolts 86,88 are threaded through the holes 82,84 in the adjustment studs 78. By manipulating the bolts 86,88, the adjustment studs 78, and thereby the structural bracket 62 or the screen bracket 64 is moved relative to the other bracket. The vertically arranged bolt 86 may displace the screen bracket 64 vertically relative to the structural bracket 62 a distance equal to or larger than the distance between two vertically adjacent holes 72 in the screen bracket 64. **In** this manner a completely stepless adjustment of the screen's height may be accomplished. Likewise, the horizontally arranged bolt 88 may displace the screen bracket 64 horizontally relative to the structural bracket 62 a distance equal to or larger than the distance (a), i.e. the mutual distance between adjacent grooves on the mounting rods 18, whereby also a completely stepless adjustment possibility is provided in this dimension.

In order to achieve an appearance of a visually integrated product, having aesthetically aligned surfaces and lines the invention may further be provided with various covers to "hide" the structural features of the invention when the product has been fully assembled. For example, as illustrated in fig. 4 a rear cover 90 may be provided in order to hide cables and/or set-top box(es), when the structural bracket 62 is employed. In this manner a visibly integrated rear side of the assembled audio/video arrangement is achieved. Likewise, as suggested in fig. 2 and 3, the brackets 10 and the legs 66 are hidden inside the soundbar 30 by an appropriate cover 92. A further top cover 94 may complete the integration when the structural bracket is not being mounted. When the structural bracket 62 is mounted, top cover 94 needs to be removed to allow access to the mounting rods on the brackets 10.

In fig. 12 is illustrated the rear side of an audio/video installation. The audio being a soundbar 30 on which is arranged a screen 96. The brackets 10 and video screen mounting system 60 is at least partly hidden by the covers 90 and 92. Furthermore a table stand 40 is provided. As is evident from the illustration in fig. 12 the assembled soundbar 30 and screen 96 appears visually as one integral unit. Furthermore, due to the aesthetically pleasingly designed covers and rear surfaces, it genuinely appears as a single integral unit.

As may also be observed in fig. 12 is the adjustment of the lower edge 102 of the screen, relative to a linear guide 104. In this example the linear guide 104 is in the shape of an upper edge of wings 106 extending in the width direction in both ends of the soundbar 30. By manipulating the adjustment means 100 as described above and as illustrated in fig. 10 and fig. 11, the exact position of the lower edge 102 of the screen 96 may be positioned in the exact desired position relative to the linear guide 104. This feature or combination of cooperating features does serve to provide the homogeneity in the overall aesthetic visual presentation of a single integral unit. Furthermore, the combination of features also effectively provides important technical aspects, in particular the acoustic decoupling of the loudspeakers/soundbar from the remaining parts of the audio or audio and video installation, allowing the audio part to generate substantial sound levels without affecting the rest of the installation or connected objects (tables, floors, walls and the like).

## Claims

1. Bracket (10) suitable to be connected to an audio or an audio and video installation, where said bracket (10) comprises a main load carrying profile (12), said profile (12) having a first longitudinal extent, from which main load carrying profile (12) one or more mounting studs (14) extend, where said mounting studs (14) are fastened to the main load carrying profile (12),
where the one or more mounting studs (14) are arranged perpendicular to and extending away from the first longitudinal extent of the main load carrying profile (12), and further that the main load carrying profile (12) in a distal end is provided with an engagement member (20) fastened to the main load carrying profile (12),
the bracket being **characterised in that** said mounting studs are further provided with resilient sleeves (16) and said engagement member (20) has coupling means (22) suitable to engage and fix the bracket (10) to a floor, wall or table.

2. Bracket according to claim 1 where further two or more mounting rods (18) are provided on the main load carrying profile (12), said mounting rods (18) extend from the main load carrying profile (12) in a direction opposite to the mounting studs (14).

3. Bracket according to claim 2 where each mounting rod (18) has a second longitudinal extent substantially perpendicular to the first longitudinal extent of the main load carrying profile (12), and where two or more grooves (54-54‴) are provided in each mounting rod (18) perpendicular to the second longitudinal extent of said mounting rods (18).

4. Bracket according to claim 3 where the mutual distance between adjacent grooves (54-54‴) in the second longitudinal extent is a fixed distance (a) where said distance is selected between 5 mm and 20 mm.

5. Bracket according to claim 3 where the cross section of the mounting rods (18) in a direction perpendicular to the second longitudinal extend is circular, and where the grooves (54-54‴) encircle the mounting rods (18).

6. Bracket according to claim 3, wherein a video screen mounting system (60) is provided, said video screen mounting system (60) comprises two parts: a structural bracket (62) and a screen bracket (64); where said structural bracket (62) has two or more parallel legs (66) extending from a main plate section (68), where at least two apertures (70) are provided in each leg (66), such that each leg (66) may be connected to a bracket (10), by inserting and having the mounting rods (18) extend through the apertures (70) in the legs (66), and where the thickness (t) of the material of the legs (66) may be accommodated in one of the grooves (54-54‴) provided in the mounting rods (18), and where the screen bracket (64) is adjustably connected by means of adjustment means (100) to the structural bracket (62).

7. Bracket according to claim 6 where the adjustment means (100) between the structural bracket (62) and the screen bracket (64) comprise two or more adjustment studs (78) projecting from either the structural bracket (62) or the screen bracket (64), where an aperture (80) on the other bracket is superposed the adjustment stud (78), and where orthogonal threaded holes (82,84) are provided in the adjustment studs (78), which holes (82,84), in use are arranged one vertically and the other horizontally, where the structural bracket (62) or the screen bracket (64) has flanges (81) accommodating threaded bolts (86,88), which bolts (86,88) are threaded through the holes (82,84) in the adjustment studs (78), such that by manipulating the bolts (86,88), the adjustment studs (78), and thereby the structural bracket (62) or the screen bracket (64) is moved relative to the other bracket.

8. Bracket 10 according to claim 6 wherein the screen bracket (64) is provided with rows of holes (72), where the rows of holes (72) are arranged according to a VESA standard, whereby a screen (96) may be fastened to the screen bracket by superposing a number of the holes (72) arranged according to said VESA standard in the screen bracket over corresponding holes provided in the screen (96), and threading a bolt or screw through at least some or all of the overlapping holes.

9. Bracket according to claim 7 wherein the vertically arranged bolt (86) may displace the screen bracket (64) vertically relative to the structural bracket (62) a distance equal to or larger than the distance between two vertically adjacent holes (72) in screen bracket (64).

10. Bracket according to claim 7 wherein the horizontally arranged bolt (88) may displace the screen bracket (64) horizontally relative to the structural bracket (62) a distance equal to or larger than the distance (a).

11. Bracket according to claim 10 wherein one or more further bolt(s) (108) is/are provided either adjacent an upper part or a lower part of the video screen mounting system (60), where said bolt(s) (108) by rotation urges either the structural bracket (62) or the screen bracket (64) away from or towards the other bracket.

12. Method of using a bracket (10) according to any of claims 1 to 11, in the arrangement of an audio or audio and video installation, where a floor, wall or table stand (42, 44, 40) is fastened to the bracket (10) by connecting the coupling means (22) provided in the engagement member (20) with corresponding coupling means (50) provided in the floor, wall or table stand (42, 44, 40) adapted for engagement with the coupling means (22) in the engagement member (20), and inserting the mounting studs (14), with the resilient sleeves (16) into apertures provided in a rear side of the audio installation (30), such that the weight of the audio installation (30) is transferred to the mounting studs (14), and via the main load carrying profile (12) and the engagement member (20) to the floor, wall or table stand (42, 44, 40).

13. Method according to claim 12, wherein a video screen (96) is provided where said video screen (96) is attached to the screen bracket (64) and where the screen bracket (64) is provided with rows of holes (72), where the rows of holes (72) are arranged according to a VESA standard, whereby the video screen (96) may be fastened to the screen bracket (64) by superposing a number of the holes (72) arranged according to said VESA standard in the screen bracket (64) over corresponding holes provided in a rear surface of the video screen (96), and threading a bolt or screw through at least some or all of the overlapping holes, thereby fastening the video screen (96) to the screen bracket (64).

14. Method according to claim 13 wherein the audio installation is a soundbar (30), said soundbar (30) having a longitudinal extent, a depth and height, where at least one linear guide (104) is provided, and where said video screen (96) has a lower edge (102) extending in the width direction of the video screen (96), and where after having attached the video screen (96) to the video screen mounting system (60), the apertures (70) in the legs (66) are inserted over the mounting rods (18) and accommodated in the grooves (54-54‴), such that the upper rim of each aperture (70) is inserted in a groove (54-54"'), where the groove (54-54‴) is selected such that the linear guide (104) is parallel with the lower edge (102) of the video screen (96), and where the linear guide (104) and the lower edge (102) of the video screen (96) are as close together as possible, whereafter the adjustment means (100) between the structural bracket (62) and the screen bracket (64), comprising two or more adjustment studs (78) projecting from either the structural bracket (62) or the screen bracket (64) are manipulated such that by rotating the threaded bolts (86,88) threaded in the horizontal and vertical holes (82,84) of the adjustment studs (78), the structural bracket (62) or the screen bracket (64) is moved relative to the other bracket, such that the linear guide (104) may be adjusted to be precisely aligned with the lower edge (102) of the video screen (96), and that a desired distance is provided between said lower edge (102) of the video screen (96) and the linear guide (104).

## Patentansprüche

1. Halterung (10), die geeignet ist, mit einer Audio- oder einer Audio- und Videoinstallation verbunden zu sein, wobei die Halterung (10) ein Hauptlastträgerprofil (12) umfasst, wobei das Profil (12) eine erste Längserstreckung aufweist, wobei sich von dem Hauptlastträgerprofil (12) ein oder mehrere Montagestifte (14) erstrecken, wobei die Montagestifte (14) an dem Hauptlastträgerprofil (12) befestigt sind,
wobei der eine oder die mehreren Montagestifte (14) senkrecht zu der ersten Längserstreckung des Hauptlastträgerprofils (12) angeordnet sind und sich von dieser weg erstrecken und das Hauptlastträgerprofil (12) ferner an einem distalen Ende mit einem Eingriffselement (20) bereitgestellt ist, das an dem Hauptlastträgerprofil (12) befestigt ist,
wobei die Halterung **dadurch gekennzeichnet ist, dass** die Montagestifte ferner mit elastischen Hülsen (16) bereitgestellt sind und das Eingriffselement (20) ein Kupplungsmittel (22) aufweist, das geeignet ist, die Halterung (10) an einem Boden, einer Wand oder einem Tisch in Eingriff zu bringen und zu fixieren.

2. Halterung nach Anspruch 1, wobei ferner zwei oder mehr Montagestangen (18) auf dem Hauptlastträgerprofil (12) bereitgestellt sind, wobei sich die Montagestangen (18) von dem Hauptlastträgerprofil (12) in einer Richtung entgegengesetzt zu den Montagestiften (14) erstrecken.

3. Halterung nach Anspruch 2, wobei jede Montagestange (18) eine zweite Längserstreckung, die im Wesentlichen senkrecht zu der ersten Längserstreckung des Hauptlastträgerprofils (12) ist, aufweist und wobei zwei oder mehr Nuten (54-54‴) in jeder Montagestange (18) senkrecht zu der zweiten Längserstreckung der Montagestangen (18) bereitgestellt sind.

4. Halterung nach Anspruch 3, wobei der gegenseitige Abstand zwischen benachbarten Nuten (54-54‴) in der zweiten Längserstreckung ein fixierter Abstand (a) ist, wobei der Abstand zwischen 5 mm und 20 mm ausgewählt ist.

5. Halterung nach Anspruch 3, wobei der Querschnitt der Montagestangen (18) in einer Richtung, die senkrecht zu der zweiten Längserstreckung ist, kreisförmig ist und wobei die Nuten (54-54‴) die Montagestangen (18) umschließen.

6. Halterung nach Anspruch 3, wobei ein Videobildschirmmontagesystem (60) bereitgestellt ist, das Videobildschirmmontagesystem (60) zwei Teile umfasst: eine strukturelle Halterung (62) und eine Bildschirmhalterung (64); wobei die strukturelle Halterung (62) zwei oder mehr parallele Schenkel (66) aufweist, die sich von einem Hauptplattenteilabschnitt (68) aus erstrecken, wobei mindestens zwei Öffnungen (70) derart in jedem Schenkel (66) bereitgestellt sind, dass jeder Schenkel (66) mit einer Halterung (10) verbunden werden kann, indem die Montagestangen (18) in die Öffnungen (70) in den Schenkeln (66) eingeführt werden und sich durch diese erstrecken, und wobei die Dicke (t) des Materials der Schenkel (66) in einer der in den Montagestangen (18) bereitgestellten Nuten (54-54‴) aufgenommen werden kann und wobei die Bildschirmhalterung (64) mittels eines Einstellmittels (100) einstellbar mit der strukturellen Halterung (62) verbunden ist.

7. Halterung nach Anspruch 6, wobei das Einstellmittel (100) zwischen der strukturellen Halterung (62) und der Bildschirmhalterung (64) zwei oder mehr Einstellstifte (78) umfasst, die entweder von der strukturellen Halterung (62) oder der Bildschirmhalterung (64) vorstehen, wobei eine Öffnung (80) an der anderen Halterung den Einstellstift (78) überlagert und wobei orthogonale Gewindelöcher (82, 84) in den Einstellstiften (78) bereitgestellt sind, wobei bei Verwendung eines der Löcher (82, 84) vertikal und das andere horizontal angeordnet sind, wobei die strukturelle Halterung (62) oder die Bildschirmhalterung (64) Flansche (81) aufweist, die Gewindebolzen (86, 88) aufnehmen, wobei die Bolzen (86, 88) derart durch die Löcher (82, 84) in den Einstellstiften (78) geschraubt sind, dass durch Betätigen der Bolzen (86, 88) die Einstellstifte (78) und dadurch die strukturelle Halterung (62) oder die Bildschirmhalterung (64) relativ zu der anderen Halterung bewegt wird.

8. Halterung 10 nach Anspruch 6, wobei die Bildschirmhalterung (64) mit Reihen von Löchern (72) bereitgestellt ist, wobei die Reihen von Löchern (72) gemäß einem VESA-Standard angeordnet sind, wodurch ein Bildschirm (96) an der Bildschirmhalterung befestigt werden kann, indem eine Anzahl der gemäß dem VESA-Standard in der Bildschirmhalterung angeordneten Löcher (72) über entsprechende in dem Bildschirm (96) bereitgestellte Löcher überlagert wird und ein Bolzen oder eine Schraube durch mindestens einige oder alle der überlappenden Löcher geschraubt wird.

9. Halterung nach Anspruch 7, wobei der vertikal angeordnete Bolzen (86) die Bildschirmhalterung (64) relativ zu der strukturellen Halterung (62) vertikal um einen Abstand verschieben kann, der gleich oder größer als der Abstand zwischen zwei vertikal benachbarten Löchern (72) in der Bildschirmhalterung (64) ist.

10. Halterung nach Anspruch 7, wobei der horizontal angeordnete Bolzen (88) die Bildschirmhalterung (64) relativ zu der strukturellen Halterung (62) horizontal um einen Abstand verschieben kann, der gleich oder größer als der Abstand (a) ist.

11. Halterung nach Anspruch 10, wobei ein oder mehrere weitere Bolzen (108) entweder benachbart mit einem oberen Teil oder einem unteren Teil des Videobildschirmmontagesystems (60) bereitgestellt ist/sind, wobei der/die Bolzen (108) durch Drehung entweder die strukturelle Halterung (62) oder die Bildschirmhalterung (64) von der anderen Halterung weg oder zu dieser hin drückt.

12. Verfahren zum Verwenden einer Halterung (10) nach einem der Ansprüche 1 bis 11 bei der Anordnung einer Audio- oder Audio- und Videoinstallation, wobei ein Boden-, Wand- oder Tischständer (42, 44, 40) an der Halterung (10) befestigt wird, indem das in dem Eingriffselement (20) bereitgestellte Kupplungsmittel (22) mit einem entsprechenden in dem Boden-, Wand- oder Tischständer (42, 44, 40) bereitgestellten Kupplungsmittel (50), das für einen Eingriff mit dem Kupplungsmittel (22) in dem Eingriffselement (20) angepasst ist, verbunden wird und die Montagestifte (14) derart mit den elastischen Hülsen (16) in in einer Rückseite der Audioinstallation (30) bereitgestellte Öffnungen eingeführt werden, dass das Gewicht der Audioinstallation (30) auf die Montagestifte (14) und über das Hauptlastträgerprofil (12) und das Eingriffselement (20) auf den Boden-, Wand- oder Tischständer (42, 44, 40) übertragen wird.

13. Verfahren nach Anspruch 12, wobei ein Videobildschirm (96) bereitgestellt ist, wobei der Videobildschirm (96) an der Bildschirmhalterung (64) festgemacht ist und wobei die Bildschirmhalterung (64) mit Reihen von Löchern (72) bereitgestellt ist, wobei die Reihen von Löchern (72) gemäß einem VESA-Standard angeordnet sind, wobei der Videobildschirm (96) an der Bildschirmhalterung (64) befestigt werden kann, indem eine Anzahl der gemäß dem VESA-Standard in der Bildschirmhalterung (64) angeordneten Löcher (72) über entsprechende in einer hinteren Oberfläche des Videobildschirms (96) bereitgestellte Löcher überlagert wird und ein Bolzen oder eine Schraube durch mindestens einige oder alle der überlappenden Löcher geschraubt wird, wodurch der Videobildschirm (96) an der Bildschirmhalterung (64) befestigt wird.

14. Verfahren nach Anspruch 13, wobei die Audioinstallation eine Soundbar (30) ist, wobei die Soundbar (30) eine Längserstreckung, eine Tiefe und eine Höhe aufweist, wobei mindestens eine lineare Führung (104) bereitgestellt ist und wobei der Videobildschirm (96) eine untere Kante (102) aufweist, die sich in der Breitenrichtung des Videobildschirms (96) erstreckt, und wobei nach dem Festmachen des Videobildschirms (96) an dem Videobildschirmmontagesystem (60) die Öffnungen (70) in den Schenkeln (66) über die Montagestangen (18) eingeführt und derart in den Nuten (54-54‴) aufgenommen werden, dass der obere Rand jeder Öffnung (70) in eine Nut (54-54‴) eingeführt wird, wobei die Nut (54-54‴) derart ausgewählt wird, dass die lineare Führung (104) parallel zu der unteren Kante (102) des Videobildschirms (96) ist, und wobei die lineare Führung (104) und die untere Kante (102) des Videobildschirms (96) so nahe wie möglich beieinander sind, woraufhin das Einstellmittel (100) zwischen der strukturellen Halterung (62) und der Bildschirmhalterung (64), umfassend zwei oder mehr Einstellstifte (78), die entweder von der strukturellen Halterung (62) oder der Bildschirmhalterung (64) vorstehen, derart betätigt wird, dass durch Drehen der Gewindebolzen (86, 88), die in die horizontalen und vertikalen Löcher (82, 84) der Einstellstifte (78) geschraubt sind, die strukturelle Halterung (62) oder die Bildschirmhalterung (64) derart relativ zu der anderen Halterung bewegt wird, dass die lineare Führung (104) so eingestellt werden kann, dass sie genau mit der unteren Kante (102) des Videobildschirms (96) ausgerichtet ist und dass ein gewünschter Abstand zwischen der unteren Kante (102) des Videobildschirms (96) und der linearen Führung (104) bereitgestellt ist.

## Revendications

1. Support (10) adapté pour être relié à une installation audio ou audio et vidéo, où ledit support (10) comprend un profilé porteur de charge principal (12), ledit profilé (12) ayant une première extension longitudinale, à partir duquel profilé porteur de charge principal (12) s'étendent un ou plusieurs goujons de montage (14), où lesdits goujons de montage (14) sont fixés au profilé porteur de charge principal (12),
où les un ou plusieurs goujons de montage (14) sont agencés perpendiculairement à la première extension longitudinale du profilé porteur de charge principal (12) et s'étendant à l'opposé de celle-ci, et en outre le profilé porteur de charge principal (12) est muni, à une extrémité distale, d'un élément de mise en prise (20) fixé au profilé porteur de charge principal (12),
le support étant **caractérisé en ce que** lesdits goujons de montage sont en outre munis de manchons élastiques (16) et ledit élément de mise en prise (20) dispose d'un moyen de couplage (22) adapté pour venir en prise avec le support (10) et fixer celui-ci à un sol, un mur ou une table.

2. Support selon la revendication 1, où en outre deux tiges de montage (18) ou plus sont prévues sur le profilé porteur de charge principal (12), lesdites tiges de montage (18) s'étendant à partir du profilé porteur de charge principal (12) dans une direction opposée aux goujons de montage (14).

3. Support selon la revendication 2, où chaque tige de montage (18) a une seconde extension longitudinale sensiblement perpendiculaire à la première extension longitudinale du profilé porteur de charge principal (12), et où deux rainures (54-54‴) ou plus sont prévues dans chaque tige de montage (18) perpendiculaires à la seconde extension longitudinale desdites tiges de montage (18).

4. Support selon la revendication 3, où la distance réciproque entre des rainures adjacentes (54-54‴) dans la seconde extension longitudinale est une distance fixe (a) où ladite distance est choisie entre 5 mm et 20 mm.

5. Support selon la revendication 3, où la section transversale des tiges de montage (18) dans une direction perpendiculaire à la seconde extension longitudinale est circulaire, et où les rainures (54-54‴) entourent les tiges de montage (18).

6. Support selon la revendication 3, dans lequel un système de montage d'écran vidéo (60) est prévu, ledit système de montage d'écran vidéo (60) comprend deux parties : un support structural (62) et un support d'écran (64) ; où ledit support structural (62) a deux branches parallèles (66) ou plus s'étendant à partir d'une section de plaque principale (68), où au moins deux ouvertures (70) sont prévues dans chaque branche (66), de sorte que chaque branche (66) puisse être reliée à un support (10), en insérant les tiges de montage (18) et en faisant en sorte qu'elles s'étendent à travers les ouvertures (70) des branches (66), et où l'épaisseur (t) du matériau des branches (66) peut être logée dans l'une des rainures (54-54‴) prévues dans les tiges de montage (18), et où le support d'écran (64) est relié de manière réglable au support structural (62) par le biais de moyens de réglage (100).

7. Support selon la revendication 6, où les moyens de réglage (100) entre le support structural (62) et le support d'écran (64) comprennent deux goujons de réglage (78) ou plus faisant saillie du support structural (62) ou du support d'écran (64), où une ouverture (80) sur l'autre support est superposée au goujon de réglage (78), et où des trous filetés orthogonaux (82, 84) sont prévus dans les goujons de réglage (78), lesquels trous (82, 84), lors de l'utilisation, sont agencés l'un verticalement et l'autre horizontalement, où le support structural (62) ou le support d'écran (64) a des brides (81) recevant des boulons filetés (86, 88), lesquels boulons (86, 88) sont vissés dans les trous (82, 84) des goujons de réglage (78), de sorte que, en manipulant les boulons (86, 88), les goujons de réglage (78), et par conséquent le support structural (62) ou le support d'écran (64), sont déplacés par rapport à l'autre support.

8. Support 10 selon la revendication 6, dans lequel le support d'écran (64) est muni de rangées de trous (72), où les rangées de trous (72) sont agencées selon une norme VESA, moyennant quoi un écran (96) peut être fixé au support d'écran en superposant un certain nombre de trous (72) agencés selon ladite norme VESA dans le support d'écran sur des trous correspondants prévus dans l'écran (96), et vissant un boulon ou une vis à travers au moins une partie ou la totalité des trous superposés.

9. Support selon la revendication 7, dans lequel le boulon agencé verticalement (86) peut déplacer le support d'écran (64) verticalement par rapport au support structural (62) d'une distance supérieure ou égale à la distance entre deux trous adjacents verticalement (72) dans le support d'écran (64).

10. Support selon la revendication 7, dans lequel le boulon agencé horizontalement (88) peut déplacer le support d'écran (64) horizontalement par rapport au support structural (62) d'une distance supérieure ou égale à la distance (a).

11. Support selon la revendication 10, dans lequel un ou plusieurs boulons supplémentaires (108) est/sont prévu(s) à proximité d'une partie supérieure ou d'une partie inférieure du système de montage d'écran vidéo (60), où le(s)dit(s) boulon(s) (108), par rotation, pousse(nt) le support structural (62) ou le support d'écran (64) loin ou vers l'autre support.

12. Procédé d'utilisation d'un support (10) selon l'une quelconque des revendications 1 à 11, dans l'agencement d'une installation audio ou audio et vidéo, où un socle de sol, mural ou de table (42, 44, 40) est fixé au support (10) en reliant le moyen de couplage (22) prévu dans l'élément de mise en prise (20) à un moyen de couplage correspondant (50) prévu dans le socle de sol, mural ou de table (42, 44, 40) adapté pour venir en prise avec le moyen de couplage (22) dans l'élément de mise en prise (20), et en insérant les goujons de montage (14), avec les manchons élastiques (16) dans des ouvertures prévues dans une face arrière de l'installation audio (30), de sorte que le poids de l'installation audio (30) soit transféré aux goujons de montage (14), et via le profilé porteur de charge principal (12) et l'élément de mise en prise (20) au socle de sol, mural ou de table (42, 44, 40).

13. Procédé selon la revendication 12, dans lequel un écran vidéo (96) est prévu, où ledit écran vidéo (96) est fixé au support d'écran (64) et où le support d'écran (64) est muni de rangées de trous (72), où les rangées de trous (72) sont agencées selon une norme VESA, moyennant quoi l'écran vidéo (96) peut être fixé au support d'écran (64) en superposant un certain nombre de trous (72) agencés selon ladite norme VESA dans le support d'écran (64) sur des trous correspondants prévus dans une surface arrière de l'écran vidéo (96), et en vissant un boulon ou une vis à travers au moins une partie ou la totalité des trous superposés, fixant ainsi l'écran vidéo (96) au support d'écran (64).

14. Procédé selon la revendication 13, dans lequel l'installation audio est une barre de son (30), ladite barre de son (30) ayant une extension longitudinale, une profondeur et une hauteur, et où au moins un guide linéaire (104) est prévu, et où ledit écran vidéo (96) a un bord inférieur (102) s'étendant dans la direction de la largeur de l'écran vidéo (96), et où, après fixation de l'écran vidéo (96) au système de montage d'écran vidéo (60), les ouvertures (70) des branches (66) sont insérées sur les tiges de montage (18) et logées dans les rainures (54-54‴), de sorte que le rebord supérieur de chaque ouverture (70) soit inséré dans une rainure (54-54‴), où la rainure (54-54‴) est choisie de sorte que le guide linéaire (104) soit parallèle au bord inférieur (102) de l'écran vidéo (96), et où le guide linéaire (104) et le bord inférieur (102) de l'écran vidéo (96) sont aussi proches que possible, où après quoi les moyens de réglage (100) entre le support structural (62) et le support d'écran (64), comprenant deux goujons de réglage (78) ou plus faisant saillie du support structural (62) ou du support d'écran (64), sont manipulés de sorte que, en faisant tourner les boulons filetés (86, 88) vissés dans les trous horizontaux et verticaux (82, 84) des goujons de réglage (78), le support structural (62) ou le support d'écran (64) soit déplacé par rapport à l'autre support, de sorte que le guide linéaire (104) puisse être ajusté pour être précisément aligné avec le bord inférieur (102) de l'écran vidéo (96), et qu'une distance souhaitée soit fournie entre ledit bord inférieur (102) de l'écran vidéo (96) et le guide linéaire (104).
